Europäisches Patentamt

(19) European Patent Office

Office européen des brevets

(11) Numéro de publication : **0 298 875 B1**

## (12) FASCICULE DE BREVET EUROPEEN

(45) Date de publication du fascicule du brevet :
21.08.91 Bulletin 91/34

(51) Int. Cl.⁵ : **A23J 1/20, A23C 9/146**

(21) Numéro de dépôt : **88420197.1**

(22) Date de dépôt : **14.06.88**

(54) Procédé pour extraire sélectivement les métallo-protéines du lactoserum par adsorption et élution.

(30) Priorité : 19.06.87 FR 8708843

(43) Date de publication de la demande :
11.01.89 Bulletin 89/02

(45) Mention de la délivrance du brevet :
21.08.91 Bulletin 91/34

(84) Etats contractants désignés :
AT BE CH DE ES FR GB GR IT LI LU NL SE

(56) Documents cités :
DE-A- 2 638 764
FR-A- 2 319 399
FR-A- 2 443 867
ANN NUTR. ALIM., vol. 32, no. 2-3, 1978, pages 243-253, Paris, FR; B. MIRABEL: "Nouveau procédé d'extraction des protéines du lacto-sérum"
JOURNAL OF FOOD SCIENCE, vol. 50, no. 3, mai/juin 1985, pages 610-614, Chicago, Il., US; J.A. NICHOLS et al.: "Spherosil-S ion exchange process for preparing whey protein concentrate"
JOURNAL OF DAIRY SCIENCE, vol. 54, no. 12, décembre 1971, pages 1725-1743; M. YAGU-CHI et al.: "Chromatographic separation of milk proteins: A review"

(73) Titulaire : ENTREMONT S.A. Société dite:
25 Faubourg des Balmettes
F-74000 Annecy (FR)
Titulaire : SOCIETE NATIONALE ELF AQUITAINE
Tour Elf, 2, Place de la Coupole, La Défense 6
F-92400 Courbevole (FR)

(72) Inventeur : Frankinet, Jacques
20 allée des Fauvettes
F-56000-Vannes (FR)
Inventeur : Peyrouset, André
23 villa Dubreuil 45 boulevard Dubreuil
F-91400-Orsay (FR)
Inventeur : Spring, François
5 rue de la Bidassoa
F-64000 Pau (FR)

(74) Mandataire : Laurent, Michel et al
Cabinet LAURENT et CHARRAS, 20, rue Louis Chirpaz B.P. 32
F-69131 Ecully Cedex (FR)

## Description

L'invention concerne un procédé pour extraire sélectivement certaines protéines du lactosérum, à savoir les métallo-protéines, notamment celles qui fixent le fer, telles que la lactoferrine, et la lactoperoxydase.

Comme on le sait, il existe plusieurs milliers de protéines. Le lactosérum en contient des centaines, dont quelques traces de métallo-protéines.

Par "métallo-protéines", on désigne des protéines qui présentent une bonne affinité pour les métaux, notamment pour le fer. Ces protéines sont de plus en plus recherchées non seulement pour leur intérêt nutritionnel, notamment comme apporteur biologique de fer chez les nourrissons (pour la lactoferrine), mais surtout pour leurs propriétés pharmacologiques, notamment comme agents antibactériens.

On connaît déjà plusieurs procédés d'extraction des protéines du lactosérum.

Dans le document GB-A-871541, on a proposé d'extraire les protéines en général par mise en contact avec une résine échangeuse d'ions constituée par une base inerte (terres de diatomées), de grande surface spécifique, revêtue d'un gel échangeur (copolymère styrènedivinylbenzène). Cette technique ancienne permet d'extraire les protéines en bloc, sans sélectivité.

Dans le document FR-A-2505615 (correspondant connu US-A-4436658), on a proposé de récupérer sélectivement les métallo-protéines recherchées, à savoir la lactoferrine et la lactoperoxydase, en percolant tout d'abord le lactosérum sur un support solide rigide, tel que notamment de la silice en milieu faiblement basique (pH de 7,9 à 8,5), puis en éluant les protéines adsorbées au moyen d'une solution acide. Ce procédé donne d'excellents résultats pour ce qui concerne l'extraction sélective. Mais il ne s'est guère développé, car le lactosérum traité prend immédiatement un caractère basique, qui le rend alors impropre à la consommation animale, sauf traitement ultérieur onéreux.

Dans le document FR-A-2359634 (correspondant américain connu US-A-4100149), on a proposé de mettre en contact le lactosérum avec une résine échangeuse de cations constituée par un support minéral poreux, de granulométrie appropriée (silice sphérique), revêtu d'un film de polymère synthétique réticulé portant des groupements échangeurs de cations représentés par des fonctions acides, telles que carboxylique, sulfonique ou phosphonique. Cette solution permet de récupérer des métallo-protéines mais associées à une très forte proportion d'immunoglobulines (voir notamment exemple 3 de ce brevet US-A-4100149 et exemple 7 ci-après). En outre, le rendement d'extraction en métallo-protéines est faible et le degré de pureté de ces protéines est jugé insuffisant sur le plan économique, sauf encore à effectuer des traitements ultérieurs donc onéreux.

Dans le document FR-A-2319299 (correspondants connus GB-A-1544867 et US-A-4673734), on a préconisé d'extraire les protéines en général, dont on sait qu'il y en a plusieurs milliers, en les mettant en contact avec un support minéral poreux revêtu en surface par un biopolymère polysaccharique aminé. Cette solution qui donne d'excellents résultats pour la purification ou la séparation des macromolécules biologiques, telles que les gamma-globulines, l'hémoglobine, l'albumine, est inopérante sur le lactosérum, car on fixe alors l'essentiel des protéines, mais on laisse passer les protéines à caractère cationique telles que les métallo-protéines. De la sorte, cette technique ne peut pas convenir à la séparation sélective de ces métallo-protéines à partir du lactosérum.

L'invention pallie ces inconvénients. Elle vise un procédé d'extraction des métallo-protéines du lactosérum, notamment celles fixant le fer, par adsorption sur un support solide, puis ensuite élution des protéines adsorbées. Elle vise plus particulièrement un procédé qui soit sélectif, économique et facile à mettre en oeuvre et surtout qui permette de récupérer vraiment sélectivement et économiquement les métallo-protéines depuis le lactosérum, sans modifier celui-ci, c'est-à-dire tout en le laissant parfaitement utilisable, notamment dans l'alimentation animale, à la fois comme élément nutritionnel et comme apporteur d'énergie, ce que l'on ne savait pas faire jusqu'alors.

Ce procédé pour extraire ces métallo-protéines du lactosérum par adsorption sur un support minéral poreux sous forme de grains, puis élution des protéines ainsi adsorbées au moyen de solutions, **se caractérise** en ce que les parois desdits grains sont recouvertes d'une couche de polysaccharide aminé, présentant en surface des groupements fonctionnels acides.

Dans la suite de la description et dans les revendications, par "polysaccharides aminés", on désigne un biopolymère ayant un caractère cationique, tel que le dextrane, l'amidon, la cellulose, l'argose et les autres sucres en -oses. Selon l'invention, ces biopolymères présentent en outre des groupements fonctionnels acides, tels que notamment carboxyliques ou sulfoniques.

En d'autres termes, l'invention consiste pour l'extraction spécifique des métallo-protéines depuis le lactosérum, dont on sait qu'il contient des centaines de protéines, à avoir sélectionné un support minéral poreux, tel que par exemple de la silice, dont la caractéristique essentielle est, d'une part, d'être recouvert non plus d'un polymère synthétique mais d'un biopolymère particulier à savoir un polysaccharide aminé, alors que l'on savait (FR-A-2319299) que ce type de biopolymère à caractère cationique ne convenait pas pour cette extraction, et d'autre part, de présenter des groupements acides, alors que l'on savait par ailleurs (FR-A-2359634) que ces groupements acides conduisaient à une sélectivité médiocre sur le plan industriel, du fait d'un rendement et d'une pureté jugés insuffisants.

Alors que l'état de la technique dissuadait d'utiliser des biopolymères, l'invention consiste justement à avoir constaté de manière totalement inattendue que l'utilisation de biopolymères spécifiques, greffés en l'occurence par des groupements acides, permet non seulement d'extraire sélectivement les métalloprotéines du lactosérum, mais surtout de bien les séparer des imuno-globulines et enfin d'opérer avec un rendement et un degré de pureté nettement améliorés et dans des conditions compatibles avec un processus industriel. Cette sélection est d'autant plus surprenante que rien dans l'état de la technique donnait à l'homme de métier l'idée de combiner les enseignements d'un matériau à caractère cationique avec un autre matériau à caractère anionique, ces éléments étant contradictoires par nature.

Il est d'autant plus surprenant que l'on puisse obtenir ce succès en enrobant des grains poreux de silice au moyen d'un polysaccharide greffé par des groupements acides et ce, pour obtenir une telle sélectivité, alors que l'on savait que ce type de résine échangeuse de cations présentant des fonctions acides était prohibé (voir document précité FR-A-2359654 page 1 lignes 17 et suivantes) comme résine échangeuse de cations pour les protéines (préjugé d'ordre technique vaincu).

Ainsi, l'invention réside dans une sélection particulière pour une sélectivité précise dans une large famille, alors que l'état de la technique dissuadait une telle sélection qui permet de résoudre avantageusement et économiquement un problème, tout en réduisant les coûts de fabrication et en augmentant la productivité.

D'une manière tout à fait inattendue, les Demandeurs ont constaté que le choix de ces grains minéraux poreux spécifiques permettent :

— d'une part, d'améliorer considérablement le rendement d'extraction (deux fois plus) ;

— d'autre part et surtout, d'extraire spécifiquement et sélectivement et avec facilité les métalloprotéines recherchées du lactosérum, sans qu'elles soient mélangées à d'autres protéines, et ce avec un rendement et un degré de pureté très nettement améliorés (économies de temps et de moyens et gain de productivité) ;

— enfin, ne pas affecter le lactosérum traité qui reste ainsi intégralement apte à la consommation et garde toute sa valeur nutrionnelle.

Cette sélection permet en outre d'opérer dans des conditions de pH voisines de la neutralité, notamment dans des conditions qui permettent de recueillir sélectivement et économiquement lesdites métalloprotéines sous forme soluble.

On pourrait penser que la sélection de l'invention est un mélange des enseignements antérieurs. D'une part, ces enseignements se contredisent et d'autre part et surtout, on sait qu'un produit chimique n'est pas un mélange de ses différents constituants.

Avantageusement, en pratique :

— le polysaccharide recouvrant les parois des grains minéraux est du dextrane ou un dérivé du dextrane, tel qu'un dérivé aminé ;

— de préférence, on fait appel à des composés du type diéthylaminoéthyldextrane (DEAE) de poids moléculaire d'au moins $10^4$, de préférence $10^5$ à $10^6$ daltons ;

— les groupements acides sont des groupements carboxyliques ou sulfoniques ; avantageusement, ces groupements acides sont fixés au biopolymère saccharide par des radicaux divalents hydrocarbonés, notamment par des groupements alkylènes, tels que méthylène ou propylène ;

— les grains minéraux poreux sont avantageusement des oxydes minéraux, tels que de préférence des grains sphériques de silice, obtenus notamment par pyrogénisation ;

— les grains de silice sont des grains sphériques dont :

• la granulométrie est comprise entre dix et mille micromètres, de préférence compris entre cent et trois cent micromètres ;

• la surface spécifique est comprise entre un et quatre cents $m^2/g$, de préférence compris entre quinze et deux cents $m^2/g$ ;

• le diamètre moyen des pores est compris entre cinq et deux cents nm ;

— dans une variante, le lactosérum est traité d'abord par un premier passage sur des grains de silice d'un premier groupe du type en question contenant des groupements acides échangeurs de cations faibles, tels que notamment des groupements carboxyliques et ce, pour retenir la lactoferrine, puis dans un second temps, le lactosérum ainsi traité passe en série sur des grains d'un second groupe comprenant des groupements acides échangeurs de cations forts, tels que notamment des groupements acides sulfoniques, et ce pour retenir la lactoperoxydase ;

— le lactosérum est un lactosérum doux, c'est-à-dire dont le pH est compris entre 6,3 et 6,6 ; dans une variante, on peut faire appel à un lactosérum acide, c'est-à-dire à un lactosérum dont le pH est compris entre 4,3 et 4,6.

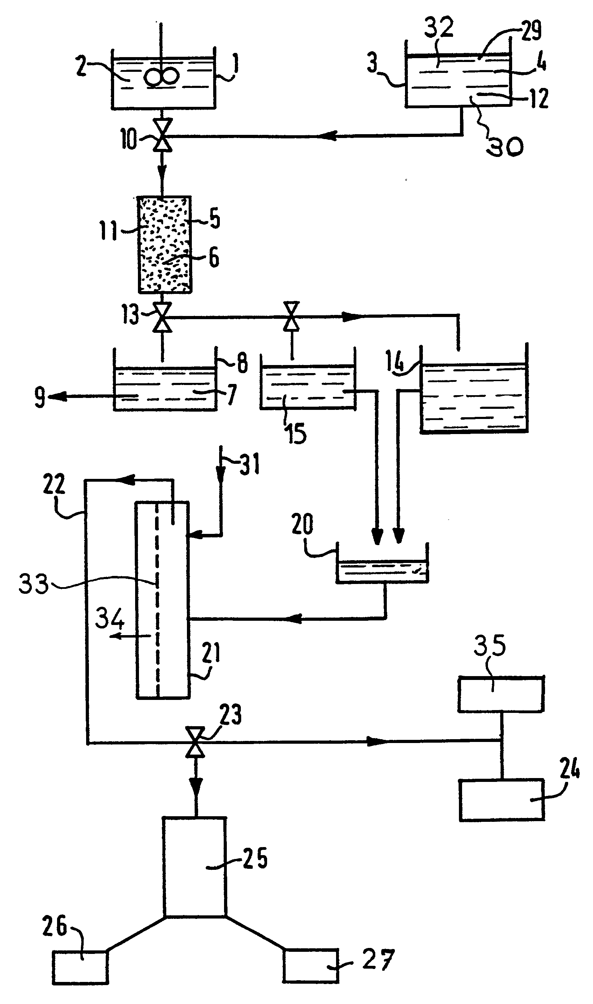

La manière dont l'invention peut être réalisée et les avantages qui en découlent ressortiront mieux des exemples de réalisation qui suivent, à l'appui de la figure unique annexée qui est une représentation schématique sommaire d'une installation conforme pour la mise en oeuvre du procédé selon l'invention.

## Exemple 1 :

Dans un réservoir (1), on introduit quatre cent litres de lactosérum (2) doux de fromagerie (pH 6,4) que l'on agite lentement pour le maintenir homogène. De manière connue, on refroidit ce lactosérum à une température comprise entre 3 et 8°C. Ce lactosérum (2) contient par litre environ 74,6 mg de lactoferrine et 50,5 mg de lactoperoxydase.

Dans un réservoir (3), on introduit vingt litres d'une première solution (4), contenant environ trois grammes par litre (g/l) de chlorure de sodium (pH neutre).

Dans la colonne (5), on place quatre kilos de grains sphériques de silice (6) poreuse commercialisée par IBF-Biotechnics sous la marque déposée "CM-SPHERODEX-LS" ayant une granulométrie comprise entre 100 et 300 microns, un diamètre de pore voisin de 100 nm, une surface spécifique d'environ 25 m²/g et dont les parois des pores sont recouvertes d'une fine couche continue de DEAE dextrane, greffée par des groupements acides carboxyliques.

Dans un premier temps, on laisse tout d'abord s'écouler le lactosérum (2) du réservoir (1) sur la silice (6) en quatre heures trente minutes.

Le lactosérum traité (7) est récupéré dans un réservoir (8), puis est envoyé en (9) pour être concentré et séché de manière usuelle. Ce lactosérum dont le pH n'a pas été modifié contient encore la plus grande partie des protéines. De la sorte, il peut être utilisé tel que dans l'alimentation animale comme apport nutritionnel.

Lorsque tout le lactosérum (2) a traversé la silice (6), on bascule la vanne (10) pour envoyer sur la colonne adsorbée désignée par la référence (11) les vingt litres de la première solution (4) de lavage à pH neutre.

La silice (6) a adsorbé les métallo-protéines recherchées du lactosérum (2).

Une fois que la solution de lavage (4) est passée, on introduit dans le réservoir (3) une seconde solution saline (12) de quinze litres, contenant treize grammes par litre de chlorure de sodium.

On laisse cette seconde solution (12) s'écouler librement sur la colonne (11) adsorbée. Par la vanne (13), on récupère le liquide de lavage dans le bac (14). On lave ensuite la silice adsorbée (6, 11) au moyen d'une troisième solution saline (32) de quatorze litres à 45 g/l de chlorure de sodium envoyée depuis le réservoir (3) et que l'on récupère dans un bac séparé (15).

Le contenu du bac (14) est envoyé dans un autre bac (20), puis de là dans un appareil d'ultra-filtration (21), où l'on injecte de l'eau de dialyse (31) pour diminuer la teneur en minéraux. On fait passer le contenu sur des membranes organiques (33) de diamètre de pores 10⁴ daltons à une température comprise entre 12 et 50°C.

On envoie ensuite le contenu du bac (15) dans le bac (20), et on procède de la même manière.

Les permeats obtenus sont récupérés en (34), notamment pour être réutilisés dans d'autres élutions.

Les retentats (22) sont récupérés en sortie de l'appareil (21) d'ultra-filtration. Grâce à une vanne (23), ces retentats (22) peuvent être envoyés :

— soit à un appareil de lyophilisation (24) où on récupère les métallo-protéines recherchées en bloc ;

— soit à une tour de séchage (35) où on les récupère également en bloc ;

— soit de préférence à un appareil de fractionnement par chromatographie (25) d'échange d'ions sur un gel organique du type commercialisé par IBF BIOTECHNIX sous la marque déposée **"SP-TRISACRYL LS"** pour être actionné dans chacune des deux protéines recherchées, respectivement la lactoferrine (26) et la lactoperoxydase (27).

On procède ensuite à un lavage de la silice (6) par l'eau (29) envoyée depuis le réservoir (3). Ce lavage est suivi d'un autre lavage acide (solution N/10 d'acide chlorydrique). La silice (6) est enfin régénérée par une percolation de vingt litres d'une solution d'acétate de sodium à pH 5.5.

Ainsi, pour quatre cent litres de lactosérum (2) de départ, on obtient :

— d'une part, pratiquement quatre cent litres de lactosérum extrait (9) apte à être utilisés directement dans l'alimentation animale ayant toute sa valeur nutritionnelle ;

— d'autre part :

• 23,6 grammes de lactoferrine, soit un taux d'extraction de 79% avec un degré de pureté par rapport aux autres protéines présentes dans cette solution d'au moins 80% ;

• 2,8 grammes de lactoperoxydase, soit un taux d'extraction de 14% avec un degré de pureté supérieur à 50%.

## Exemple 2 :

On répète l'exemple 1 en injectant dans l'eau de dialyse (31) une solution aqueuse à deux grammes par litre (2 g/l) d'ammonium sulfate de fer stabilisé par l'acide ascorbique. On sature ainsi en fer les protéines recherchées, ce qui augmente leur efficacité nutritionnelle.

## Exemple 3 :

On répète l'exemple 1 aux variantes ci-après.

On remplace tout d'abord la silice (6) par une même quantité de grains de silice poreuse, commercialisée sous la dénomination SP-SPHERODEX-LS (marque déposée), dont les parois sont recouvertes d'une couche de DEAE dextrane, greffée par des groupements sulfo-propyle et dont les caractéristiques physiques sont voisines de celles des grains de l'exemple 1.

On traite 306 litres d'un lactosérum doux de fromagerie de pH 6,4 contenant 46,2 mg/l de lactoferrine et 44,7 mg/l de lactoperoxydase. Le débit est réglé à cent litres/heure. Dans le réservoir (3), on introduit dix-sept litres d'une première solution (4) contenant trois grammes/litre de chlorure de sodium.

L'éluat (12) est constitué par vingt-huit litres d'une solution saline à 15 g/l de chlorure de sodium et permet de récupérer en (14) 1,23 g de lactoferrine et 0,6 g de lactoperoxydase.

Le deuxième éluat (32) est constitué par vingt-sept litres à 45 g/l de chlorure de sodium et permet de récupérer en (15) 2,7 g de lactoferrine et 5,1 g de lactoperoxydase.

Enfin, on traite par un autre éluat (30) constitué par vingt et un litres contenant 60 g/l de chlorure de sodium. On obtient 4,0 g de lactoferrine.

Ainsi, on a pu récupérer :
- 7,93 g de lactoferrine (rendement : 57%),
- 5,7 g de lactoperoxydase (rendement : 42%).

### Exemple 4 :

On répète l'exemple 1 en remplaçant le lactosérum doux de fromagerie par 198 litres de lactosérum acide de caséinerie de pH : 4,5, contenant 84,0 mg/l de lactoferrine et 37,0 mg/l de lactopéroxydase.

On règle le débit de passage du lactosérum sur les grains de silice à groupements carboxyliques à cent litres/heure.

Comme précédement, on lave avec vingt litres d'une solution (4) contenant 3 g/l de chlorure de sodium.

La première élution (12) est effectuée au moyen d'une solution de vingt litres contenant 15 g/l de chlorure de sodium. On obtient 2,08 g de lactoferrine et 1,6 g de lactoperoxydase.

La deuxième élution (32) est effectuée au moyen d'une solution de trente et un litres contenant 45 g/l de chlorure de sodium. On obtient 3,7 g de lactoferrine.

Ainsi, on récupère :
- 5,78 g de lactoferrine (rendement 35%),
- 1,6 g de lactoperoxydase (rendemnt 22%).

### Exemple 5 :

On répète l'exemple 3 avec 180 litres de lactosérum acide de caséinerie (pH = 4,5) contenant 87 mg/l de lactoferrine et 33 mg/l de lactoperoxydase.

La solution de lavage saline (4) contient douze litres à 3 g/l de chlorure de sodium.

La première élution (12) est effectuée au moyen d'une solution de trente huit litres contenant 15 g/l de chlorure de sodium. On obtient 1,3 g de lactoferrine et 0,16 g de lactoperoxydase.

La seconde élution (32) est effectuée au moyen de vingt huit litres d'une solution à 45 g/l de chlorure de sodium. On obtient 3,0 g de lactoferrine et 3,9 g de lactoperoxydase

On récupère ainsi :
- 4,3 g de lactoferrine (rendement : 27%),
- 4,06 g de lactoperoxydase (rendement : 69%).

### Exemple 6 :

Cet exemple illustre un traitement selon l'invention effectué par passage du même lactosérum sur deux colonnes en série contenant chacune un type différent de grains de silice dont les parois sont recouvertes d'une couche de polysaccharide aminée.

Sur une première colonne contenant quatre kilos de grains de silice CM SPHERODEX LS identiques à ceux de l'exemple 1 (groupements carboxyliques), on percole en deux heures et demi 250 litres d'un lactosérum doux de fromagerie contenant 81,5 mg/l de lactoferrine et 52,0 mg/l de lactoperoxydase.

On stocke le lactosérum ainsi traité dans un réservoir approprié, puis on lave la silice (6, 11) avec quinze litres d'une solution aqueuse (4) contenant 3 g/l de chlorure de sodium.

On élue ensuite tout d'abord avec une première solution (12) de quinze litres à 13 g/l de chlorure de sodium et on recueille une solution contenant 1,87 g de lactoperoxydase et 0,85 g de lactoferrine, puis au moyen d'une seconde élution (32) de seize litres à 45 g/l de chlorure de sodium permettant de recueillir alors 19,0 g de lactoferrine.

On a donc recueilli ainsi :
- 19,85 g de lactoferrine (rendement : 98%)
- 1,87 g de lactoperoxydase (rendement : 14%).

Les 250 litres de lactosérum stockés déjà traités sont ensuite percolés sur une seconde colonne contenant 2,5 kilos de grains SP SPHERODEX LS (groupements sulfopropyle), identiques aux grains de l'exemple 3 avec un débit de 100 litres/heure.

Ce lactosérum qui ne convient pratiquement plus de lactoferrine, contient encore 42,1 mg/l de lactoperoxydase.

Après percolation, on lave la colonne avec une solution de 20,5 litres de chlorure de sodium à 3 g/l.

On élue ensuite par trente sept litres d'une solution de chlorure de sodium à 15 g/l et on obtient 1,7 g de lactoperoxydase.

On élue ensuite par une solution de dix-huit litres à 45 g/l de chlorure de sodium et on obtient 9,3 g de lactoperoxydase.

On a donc obtenu par ce deuxième traitement onze grammes (11 g) de lactoperoxydase soit la quasi-totalité contenue dans le lactosérum initial (11 + 1,87 = 12,87 pour 13 g/l).

En d'autres temps, les deux opérations successives de percolation du lactosérum sur deux types de grains de silice différents, permettent donc d'extraire la quasi-totalité de la lactoferrine et de la lactoperoxydase présentes dans le lactosérum initial.

**Exemple 7 :**

On répète l'exemple 1 en remplaçant la silice "CM-SPHERODEX-LS" par une silice poreuse "hydrophile" de mêmes caractéristiques physiques qu'à l'exemple 1. Cette silice poreuse hydrophile est recouverte d'un polymère acrylique synthétique greffé par des groupements acides carboxyméthyl, conformément aux enseignements du document FR-A-2359634 cités dans le préambule.

Sur 2,5 kilos de cette silice, on fait passer trois cents litres de lactosérum doux (pH 6,4) avec un débit de 75 litres/heure contenant 50,2 mg/l de lactoferrine et 33,8 mg/l de lactoperoxydase.

Après élutions, on obtient :
— d'une part, trois cent litres de lactosérum (9) utilisable comme élément nutritionnel pour le bétail ;
— d'autre part :
 • cent vingt grammes de protéines diverses contenant essentiellement des immunoglobulines,
 • 7,1 g de lactoferrine (rendement : 47% contre 79% à l'exemple 1, avec un degré de pureté inférieur à 40% contre 80%,
 • 0,9 g de lactoperoxydase (rendement : 9% contre 14,9%), avec un degré de pureté inférieur à 30% contre 50% à l'exemple 1.

De la sorte, cette lactoferrine et cette lactoperoxydase sont essentiellement mélangées à une très forte proportion d'immunoglobulines, d'où il faut les séparer.

En d'autres termes, non seulement le rendement de cet état de la technique est nettement inférieur en métallo-protéines, mais également le taux de pureté de ces métallo-protéines est moindre, ce qui nécessite alors des opérations ultérieures de purification.

**Exemple 8 :**

On répète l'exemple 1 avec une silice poreuse identique à celle mise en oeuvre à l'exemple 1, mais recouverte d'un film de diéthylaminoéthyldextrane (DEAE), commercialisé par IBF-BIOTECHNICS sous la dénomination DEAE SPHERODEX-LS (enseignements du brevet US-A-4673734).

On fixe alors l'essentiel des protéines du lactosérum à l'exclusion de la lactoferrine et de la lactoperoxydase recherchées qui se trouvent entraînées avec le lactosérum (9).

Ce deux derniers exemples illustrent parfaitement l'effet surprenant de la sélection selon l'invention.

L'utilisation de silice recouverte d'un biopolymère aminé mais non greffé ne donne pas les résultats recherchés, à savoir l'extraction spécifique de la lactoferrine et de la lactoperoxydase.

La mise en oeuvre de ces mêmes grains sphériques de silice mais revêtus d'un polymère synthétique présentant des groupements fonctionnels acides, permet de recueillir les métallo-protéines, mais combinées à d'autres protéines et avec un rendement et un degré de pureté nettement insuffisants (voir exemple 7 ci-dessus).

Le procédé d'extraction de la lactoferrine et de la lactoperoxydase selon l'invention se distingue des procédés proposés jusqu'alors, essentiellement par :
— l'extraction sélective de ces deux protéines recherchées mais difficiles jusqu'alors à extraire, car présentes en trop faible quantité et mélangées à d'autres protéines ;
— la simplicité de mise en oeuvre ;
— le rendement d'extraction particulièrement élevé (près de deux fois plus élevé) que les rendements de l'état de la technique, voire notamment exemples 7 et 8 ;
— la pureté des métallo-protéines extraites élevées du fait sans doute de la meilleure spécificité d'extraction.

Les métallo-protéines récupérées de la sorte, à savoir notamment celles qui fixent le fer, telles que la lactoferrine et la lactoperoxydase, peuvent être utilisées avec succès dans les applications connues à ce jour, telles que par exemple :
— en nutrition animale pour la protection du tube digestif et le rôle de facteur de croissance ;
— dans le domaine vétérinaire pour l'activité anti-infectieuse intestinale et au niveau mammaire ;
— dans le domaine diététique et de la nutrition humaine, notamment comme vecteur de fer ;
— dans le domaine pharmaceutique : ophtalmologie, gastro-entérologie, paradontologie, dermatologie, gynécologie..

**Revendications**

1. Procédé pour extraire sélectivement les métallo-protéines du lactosérum, par adsorption sur un support minéral poreux sous forme de grains, puis élution des métallo-protéines ainsi adsorbées au moyen de solutions, **caractérisé** en ce que les parois desdits grains sont recouvertes d'une couche de polysaccharides aminés, présentant en surface des groupements fonctionnels acides.

2. Procédé selon la revendication 1, caractérisé en ce que le biopolymère polysaccharide recouvrant les parois des grains minéraux est du dextrane.

3. Procédé selon la revendication 2, caractérisé en ce que le dextrane est du diéthylaminoéthyldextrane.

4. Procédé selon l'une des revendications 1 à 3, caractérisé en ce que les groupements acides sont des groupements carboxyliques ou sulfoniques.

5. Procédé selon la revendication 4, caractérisé en ce que les groupements acides sont fixés au biopolymère saccharide par des radicaux divalents hydrocarbonés.

6. Procédé selon la revendication 5, caractérisé en ce que les radicaux divalents hydrocarbonés sont des groupements alkylènes.

7. Procédé selon l'une des revendications 1 à 6, caractérisé en ce que les grains minéraux poreux sont des grains sphériques de silice dont :
— la granulométrie est comprise entre dix et mille micromètres ;
— la surface spécifique est comprise entre un et quatre cents m²/g ;
— le diamètre moyen des pores est compris entre cinq et deux cents nanomètres.

8. Procédé selon l'une des revendications 1 à 7, caractérisé en ce que le lactosérum est traité tout d'abord par passage sur des grains de silice dont les parois sont recouvertes d'une couche de polysaccharides aminés présentant en surface des groupements carboxyliques, puis en ce que le lactosérum ainsi traité passe en série sur des grains de silice dont les parois sont recouvertes d'une autre couche de polysaccharides aminés présentant en surface des groupements acides sulfoniques.


## Patentansprüche

1. Verfahren zum selektiven Extrahieren der Metallproteine von Molke durch Adsorption an einem porösen mineralischen Träger in Form von Körnern, sowie anschließendem Eluieren der adsorbierten Metallproteine mittels Lösungen, dadurch gekennzeichnet, daß die Wände der Körner mit einer Schicht an aminierten Polysacchariden, die an der Oberfläche funktionelle Säuregruppen aufweisen, bedeckt sind.

2. Verfahren nach Anspruch 1, dadurch gekennzeichnet, daß das biopolymere Polysaccharid, das die Wände der mineralischen Körner bedeckt, Dextran ist.

3. Verfahren nach Anspruch 2, dadurch gekennzeichnet, daß das Dextran Diethylaminoethyldextran ist.

4. Verfahren nach einem der Ansprüche 1 bis 3, dadurch gekennzeichnet, daß die Säuregruppen Carboxyl- oder Sulfongruppen sind.

5. Verfahren nach Anspruch 4, dadurch gekennzeichnet, daß die Säuregruppen über divalente kohlenwasserstoffhaltige Radikale an den biopolymeren Sacchariden fixiert sind.

6. Verfahren nach Anspruch 5, dadurch gekennzeichnet, daß die divalenten kohlenwasserstoffhaltigen Radikale Alkylengruppen sind.

7. Verfahren nach einem der Ansprüche 1 bis 6, dadurch gekennzeichnet, daß die porösen mineralischen Körner kugelförmige Körner aus Kieselerde sind, bei denen :
— die Korngröße zwischen zehn und eintausend Mikrometer liegt ;
— die spezifische Oberfläche zwischen einem und vierhundert m²/g liegt ;
— der mittlere Porendurchmesser zwischen fünf und zweihundert Nanometer liegt.

8. Verfahren nach einem der Ansprüche 1 bis 7, dadurch gekennzeichnet, daß die Molke zuallererst dahingehend behandelt wird, daß sie über Kieselerdekörner läuft, deren Wände mit einer Schicht an aminierten Polysacchariden bedeckt sind, die auf ihrer Oberfläche Carboxylgruppen aufweisen, wobei anschließend die so behandelte Molke serienmäßig über Kieselerdekörner laufen gelassen wird, deren Wände mit einer anderen Schicht an aminierten Polysacchariden bedeckt sind, deren Oberfläche sulfonische Säuregruppen aufweist.


## Claims

1. Process for the selective extraction of metalloproteins from whey, by adsorption on a porous inorganic support in the form of particles, followed by elution of the metalloproteins thus adsorbed by means of solutions, **characterized** in that the walls of the said particles are coated with a layer of aminated polysaccharides possessing acidic functional groups at the surface.

2. Process according to claim 1, characterized in that the polysaccharide biopolymer coating the walls of the inorganic particles is dextran.

3. Process according to one of claim 2, characterized in that the dextran is diethylaminoethyldextran.

4. Process according to one of claims 1 to 3, characterized in that the acidic groups are carboxylic or sulphonic acid groups.

5. Process according to claim 4, characterized in that the acidic groups are bound to the saccharide biopolymer via divalent hydrocarbon radicals.

6. Process according to claim 5, characterized in that the divalent hydrocarbon radicals are alkylene groups.

7. Process according to one of claims 1 to 6, characterized in that the porous inorganic particles are spherical silica particles whose :
— particle size is between ten and one thousand micrometers ;
— specific surface area is between one and four hundred m²/g ;
— mean pore diameter is between five and two hundred nanometers.

8. Process according to one of claims 1 to 7, characterized in that the whey is treated in the first place by passage through silica particles whose walls are coated with a layer of aminated polysaccharides possessing carboxyl groups at the surface, and then in that the whey thus treated passes in series through silica particles whose walls are coated with another layer of aminated polysaccharides possessing sulphonic acid groups at the surface.